# EUROPEAN PATENT APPLICATION

(11) **EP 1 503 374 A2**
(43) Date of publication of application: **02.02.2005**
(21) Application number: 04017746.1
(22) Date of filing: 27.07.2004
(51) Int. Cl.: G11B 7/085

(54) **Pickup shift device**

(30) Priority: 30.07.2003 JP 2003282985; 30.07.2003 JP 2003282986
(71) Applicant: ORION ELECTRIC CO., Ltd., Takefu-City, Fukui 915-8555 (JP)
(72) Inventor: Nishide, Masahiko, Takefu-city Fukui 915-8555 (JP); Makino, Takeshi, Takefu-city Fukui 915-8555 (JP)
(74) Representative: Goddar, Heinz J., Dr.

(57) **Abstract**

The invention is intended to provide a pickup shift device capable of shifting operation with high precision without imposing a load on a drive transmission mechanism (15), such as a rack, pinion, and so forth, all the time. Abase stand (14) fixed to a pickup unit (11) has a slide face part (31) extended toward the side thereof, and on the upper face of the base stand (14), there are provided a cam follower member (32) and a spring member (34). A shift rack (36) is provided on the slide face part (31) in such a way as to overlap the latter, and slidably in the shift direction of the pickup unit (11), and the shift rack (36) is provided with a cam (39). The cam (39) has a cam face (40) formed so as to have a curvature, and by fitting a cam follower member (32) to the curvature to be pressed into contact therewith by a spring member (34), the base stand (14) and the shift rack (36) are retained at a predetermined position. A double gear (20) is meshed with a row of teeth of the shift rack (36), thereby preventing backlash

## Description

### FIELD OF THE INVENTION

The invention relates to a pickup shift device for use in a disc player for reading information recorded in discs, such as CDs (Compact Discs), DVDs (Digital Versatile Discs), and so forth.

### BACKGROUND OF THE INVENTION

In the case of reading information recorded in a disc, such as a CD, a DVD, and so forth, the information recorded is read by shifting a pickup in the direction of the radius of the disc while the disc is being clamped and rotated. Following the recent trend toward higher recording density of the disc, controlling a reading position of the pickup with high precision has been in demand. In response to such a demand, progress has since been made in design ideas for improvement on a drive transmission mechanism, such as gears, and so forth, for transmitting drive from a drive means, such as a motor and so forth. For example, in Patent Documents JU 3-35364A and JU 3-89564A, it is disclosed that a rack installed for shifting a pickup is provided with another rack slidably disposed, and both the racks are urged by an urging member such as a spring, and so forth, thereby clamping a drive gear. With the use of such a mechanism, it is possible to prevent backlash from occurring between the racks and drive gear to enable the shifting operation of the pickup to be executed with higher precision. Further, in Patent Document JU registration No. 3089167, it is disclosed that a field rack installed on a base having a pickup is provided with an auxiliary rack repulsively urged in the direction of a row of teeth of the field rack so as to slidably overlie the field rack, and while a tooth of the field rack, coming to mesh with a pinion when the pickup arrives at a stop position, is lacking, a row of teeth of the auxiliary rack is extended such that upon the pinion coming to mesh with an extended portion of the row of the teeth of the auxiliary rack, the auxiliary rack is caused to shift in the direction of the row of the teeth in relation to the field rack, thereby executing a linkup operation with a predetermined operation mechanism. Still further, in Patent Document JP 2000-90601A , it is disclosed that large and small main gears have large and small auxiliary gears, attached thereto, respectively, rotatable in unison, and separately from the large and small main gears, respectively, a compression spring is disposed between the respective main gears and the respective auxiliary gears, and the large main gear and auxiliary gear are in mesh with a drive gear of a motor while and the small main gear and auxiliary gear are in mesh with a rack of a pickup unit.

In either Patent Document JU 3-35364A, JU 3-89564A or JU registration No. 3089167, the two racks are always urged by the urging member, such as a spring, and so forth, to thereby repulsively clamp the pinion, so that backlash is prevented from occurring between the pinion and the racks. Because the racks and pinion are always kept in as urged state, respective constituent members need to have strength sufficient to withstand such a state as described. Further, in order to retain the two racks in a predetermined positional relationship, it is necessary to install a separate mechanism, such as a spring, and so forth, opposing an urging force. Particularly, in the case of causing only the auxiliary rack to shift as disclosed in Patent Document JU registration No. 3089167, because a repulsive force of a coil spring becomes large, imposing a large load on the racks and pinion, there is the need for coping with the load, so that it is impossible to provide a large shift distance for the auxiliary rack. In the case of Patent Document JP 2000-90601A, an idea of preventing backlash by use of an intermediate gear is proposed, however, it involves complex construction, and a risk of gear bodies being weakened in strength.

### SUMMARY OF THE INVENTION

It is therefore an object of the invention to provide a pickup shift device capable of effecting shifting operation with high precision without imposing a load on a drive transmission mechanism, such as a rack, pinion, and so forth, all the time.

The pickup shift device according to the invention comprises a shift rack slidable along the shift direction of a pickup unit, provided on a slide face part disposed in a base stand fixed to a side part of the pickup unit, a cam follower member attached to the base stand so as to be rotatably reciprocating, a cam face provided in the shift rack, an urging member provided in the base stand, urging the cam follower member to be always pressed into contact with the cam face, a gear member to be meshed with teeth formed in the shift rack, and a drive means for driving the gear member for rotation, wherein fitting of the cam follower member in a curvature of the cam face causes the base stand and the shift rack to shift in unison.

Further, with these features, a rock arm is formed integrally with the cam follower member, and the cam face is formed in a curve such that sliding of only the shift rack, on the slide face part, causes the cam follower member to be disengaged from the curvature, and subsequently, the rock arm makes rocking motion against the urging of the urging member.

The gear member comprises a double gear in mesh with the teeth formed in the shift rack, and an urging member with teeth, for urging respective gears of the double gear, in directions opposite to each other, such that the teeth of the shift rack is clamped by the teeth of the respective gears of the double gear, meshed with the shift rack.

Sill further, the slide face part has a base stand rack with a row of teeth formed along the shift direction of the pickup unit, the shift rack has a row of teeth formed in such a way as to overlap the row of the teeth of the base stand rack, and fitting of the cam follower member in the curvature of the cam face causes teeth of the gear member to be clamped by teeth of the base stand rack and teeth of the shift rack, meshed with the gear member.

Further, in the case of shifting the pickup unit toward the standby position of the pickup unit by rotation of the gear member, the row of the teeth of the shift rack is formed so as to be extended beyond the end of the row of the teeth of the base stand rack, so that meshing of the gear member with an extended portion of the row of the teeth of the shift rack causes the shift rack only to make further shift.

With the adoption of such a configuration as described above, since the cam follower member slidably provided on the base stand fit into the curvature of the cam face, and the base stand and the shift rack are shifted in unison, the base stand and the racks will not be kept in as urged state all the time, so that it is possible to prevent a drive transmission mechanism, such as the racks, the gear member, and so forth, from being subjected to a load all the time.

Further, if the rock arm is formed integrally with the cam follower member, and the cam face is formed in the curve such that shifting of only the shift rack causes the cam follower member to be disengaged from the curvature and subsequently, the rock arm makes rocking motion against the urging of the urging member, the rock arm is rocked is in sync with the shifting action of the shift rack, so that rocking motion by the rock arm can be executed following the shift of the pickup unit to the standby position.

Further, if the double gear in mesh with the teeth of the shift rack is used for the gear member, and the teeth of the shift rack is clamped by the teeth of the respective gears of the double gear, meshed with the shift rack, this will prevent backlash between the shift rack and the gear member, thereby forming the drive transmission mechanism with high precision.

Still further, if the slide face part is provided with the base stand rack having the row of the teeth formed along the shift direction of the pickup unit, and the shift rack has the row of the teeth formed in such a way as to overlap the row of the teeth of the base stand rack, so that fitting of the cam follower member in the curvature of the cam face causes the teeth of the gear member to be clamped by the teeth of the base stand rack and the teeth of the shift rack, meshed with the gear member, it is possible to prevent backlash between the shift rack and the gear member, thereby forming the drive transmission mechanism with high precision.

Yet further, when shifting the pickup unit toward the standby position of the pickup unit by rotation of the gear member, if the row of the teeth of the shift rack is formed so as to be extended beyond the end of the row of the teeth of the base stand rack, and the meshing of the gear member with an extended portion of the row of the teeth of the shift rack causes the shift rack only to make further shift, this will enable the shift rack only to be smoothly shifted. That is, if the cam follower member is disengaged from the curvature of the cam face, retaining the shift rack at a predetermined position, there is nothing to urge against the shifting direction of the shift rack, so that the shift rack can be smoothly shifted, and also, a shifting distance can be freely designed by setting the length of the extended portion of the row of the teeth as appropriate.

### BRIEF DESCRIPTION OF THE DRAWINGS

Fig. 1 is a schematic plan view showing the internal construction of an optical disc player provided with one embodiment of the invention;
Fig. 2 is a partially enlarged plan view of a pickup shift device according to the embodiment of the invention;
Fig. 3 is an exploded assembly perspective view showing the embodiment of the invention;
Fig. 4 is an enlarged plan view showing a cam part;
Fig. 5 (A) is a plan view of a transmission gear, and Fig. 5 (B) is a sectional view of the same;
Figs. 6 (A) and 6 (B) are schematic illustrations showing a state where a rack is out of, and in mesh with a double gear, respectively;
Figs. 7 (A) to 7 (C) are schematic illustrations showing operation according to the embodiment of the invention;
Fig. 8 is a partially enlarged plan view of another embodiment of the invention;
Fig. 9 is an exploded assembly perspective view of the embodiment of the invention, shown in Fig. 8;
Figs. 10 (A) to 10 (C) are schematic illustrations showing operation according to the embodiment of the invention, shown in Fig. 8; and
Fig. 11 is a schematic illustration showing a state of operation according to the embodiment of the invention, shown in Fig. 8.

### PREFERRED EMBODIMENTS OF THE INVENTION

Embodiments of the invention are described in detail hereinafter. It is to be understood however, that, since the embodiments described hereinafter represent preferred examples in carrying out the invention, various technical limitations are described therein, however, the invention is not limited to those embodiments unless otherwise explicitly stated.

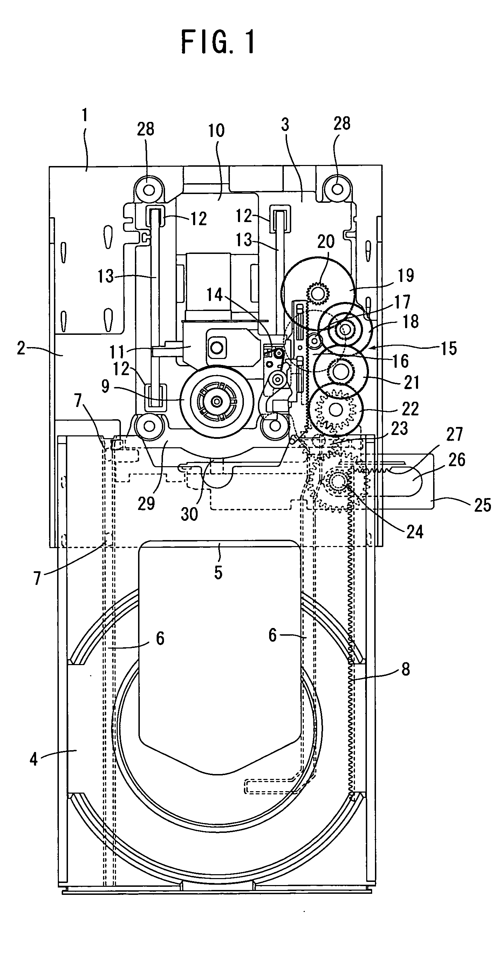

Fig. 1 is a schematic plan view showing the internal construction of an optical disc player provided with one embodiment of the invention. There is an opening region 2 formed by cutting out a large area in the bottom face of a main body frame 1, and a base plate frame 3 as described later is disposed inside the opening region 2. On the front side of the main body frame 1 (in the lower part in Fig. 1), there is formed a front side frame 5 for guiding a tray 4 with a disc placed thereon in the back-and-forth direction, and slider grooves 6 formed on the underside of the tray 4 so as to be extended in the back-and-forth direction are fitted onto guider ribs 7 provided on the front side frame 5 so as to protrude therefrom, respectively, thereby carrying the tray 4 into, or out of the main body frame 1. Further, a tray rack 8 is disposed along the back-and-forth direction on the underside of the tray 4 so as to mesh with a drive transmission mechanism 15 described later on, thereby controlling the shifting of the tray 4, in the back-and-forth direction.

A motor provided with a turntable 9 for supporting the disc by clamping the same is fixedly attached to the base plate frame 3, and in an opening region 10 rectangular in shape, formed in the central part of the base plate frame 3, a pickup unit 11 is disposed. Above the turntable 9, a clamper (not shown) is attached to a support frame provided so as to bridge across the main body frame 1. The pickup unit 11 is slidably fitted to a pair of rod-like guides 13 fixed to support stands 12 erected on the base plate frame 3, respectively, and is caused to shift in the direction of the radius of the disc loaded on the turntable 9, thereby executing a read operation.

A base stand 14 is fixed to a side part of the pickup unit 11, on one side thereof, and the pickup unit 11 is carried due to shifting of the base stand 14, caused by the action of a rack-pinion mechanism described later on, thereby enabling positioning of the pickup unit 11 to a read-in position to be implemented.

A row of gears and a motor 16 serving as a drive source, making up the drive transmission mechanism 15, are attached to the base plate frame 3. An intermediate step gear of a 3-step gear 18 is meshed with a drive gear 17 fixed to the drive shaft of the motor 16. With the 3-step gear 18, the intermediate step gear is the largest in diameter, a lower step gear thereof is the smallest in diameter, and an upper step gear thereof is intermediate in diameter. Further, the lower step gear is meshed with a transmission gear 19. A double gear 20 is coaxially attached to the transmission gear 19 as described later on. Meanwhile, the upper step gear of the 3-step gear 18 is meshed with an upper step gear of a 2-step gear 21, and with the 2-step gear 21, the upper step gear is set so as to be larger in diameter than a lower step gear thereof. Further, the lower step gear is meshed with an upper step gear of a 2-step gear 22. With the 2-step gear 22 as well. the upper step gear is set so as to be larger in diameter than a lower step gear thereof. Further, the lower step gear is meshed with a transmission gear 23, and the transmission gear 23 is meshed with a lower step gear of a tray drive gear 24 provided in the front side frame 5. Further, an upper step gear of the tray drive gear 24 is meshed with the tray rack 8 disposed on the underside of the tray 4.

Upon driving the drive transmission mechanism 15 by the motor 16, a drive force is transmitted to thereby rotate the tray drive gear 24, whereupon the tray rack 8 is driven to thereby carry the tray 4.

Now, there is described a mechanism for causing the base plate frame 3 to undergo up-and-down movements in sync with a carrying action of the tray 4. The front side frame 5 is provided with a rocking guide member 25 installed so as to be rockable from side to side, and a slender opening 26 extending in the lateral direction is bored in the rocking guide member 25. The tray drive gear 24 is disposed inside the slender opening 26, and upon the tray drive gear 24 coming to mesh with rack teeth 27 formed inside the slender opening 26, the rocking guide member 25 is caused to shift from side to side. Meanwhile, the back end of the base plate frame 3 is supported by a pair of support spindles 28 disposed on the right and left sides, respectively, and is installed so as to be vertically rockable centering around the respective support spindles 28. A rocking receive member 29 is fixed to the frond end of the base plate frame 3, and both ends of the rocking receive member 29, on the right side and left side, fit into bearing parts of the main body frame 1, respectively, so as to be vertically movable. A rocking rod 30 is protruded in the central part of the rocking receive member 29, and is inserted in a guide groove formed in the rocking guide member 25. Further, because the guide groove is defined so as to extend in the lateral direction, and a part thereof is formed so as to be vertically tilted (not shown in the figure), the rocking rod 30 undergoes vertical movement in response to the shifting action of the rocking guide member 25, in the lateral direction. Accordingly, the base plate frame 3 in whole, together with the rocking rod 30, comes to undergo vertical movement in sync with the carrying action of the tray 4. At a time for carrying the tray 4 into, or out of the main body frame 1, the base plate frame 3 is shifted downward for once, thereby causing the clamper to move away from the turntable 9, so that the transfer of the tray 4 can be implemented without an obstacle of the carriage of the disc.

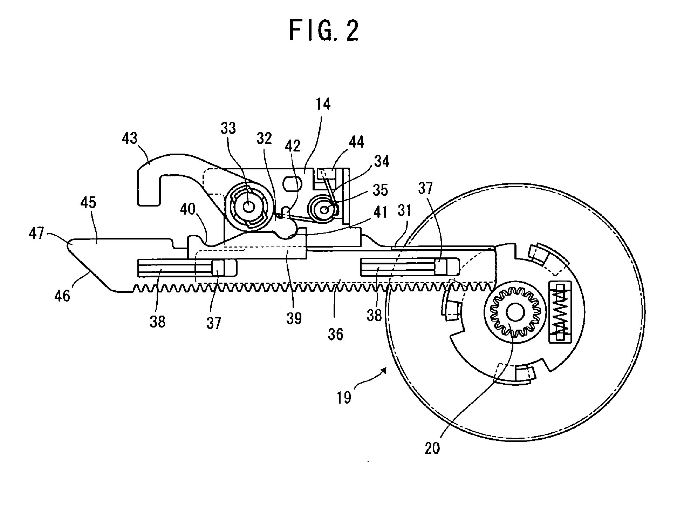

Fig. 2 is a partially enlarged plan view of a pickup shift device according to the embodiment of the invention. The base stand 14 fixed to the side part of the pickup unit 11 has a slide face part 31 extended toward the side thereof, opposite from the pickup unit 11, and on the upper face of the base stand 14, there are erected side by side a rotating spindle 33 for pivotally supporting a cam follower member 32 so as to be rotatably reciprocating, and an attachment spindle 35 to which a spring member 34 is fitted.

A shift rack 36 is disposed on the upper face of the slide face part 31 in such a way as to overlap the latter, and on a side face of the shift rack 36, there is formed a linear row of teeth along the shift direction of the pickup unit 11. On the upper face of the slide face part 31, there are erected slide protrusions 37 on the right and left sides, respectively, along the shift direction of the pickup unit 11, with a predetermined spacing interposed therebetween. The shift rack 36 is provided with slide grooves 38 linear in shape, in which the slide protrusions 37 fit, respectively, formed along the shift direction of the pickup unit 11. Accordingly, the shift rack 36 is rendered freely slidable only in the shift direction of the pickup unit 11 by virtue of the slide protrusions 37. On the side of the shift rack 36, opposite from the side face thereof, provided with the linear row of the teeth, there is disposed a cam 39 having a cam face 40 formed so as to be curved.

The cam follower member 32 has a press-contact face 41 to be pressed into contact with the cam face 40, formed in the shape of a curvature in such a way as to be seen as a circular arc in a plan view, and an engaging protrusion 42 is protruded on the side of the cam follower member 32, opposite from the press-contact face 41. A rock arm 43 at a position symmetrical with the cam follower member 32 about the rotating spindle 33 is formed integrally with the cam follower member 32, and as the cam follower member 32 is rocked around the rotating spindle 33, so rocked is the rock arm 43 as well in the same direction in sync with the cam follower member 32.

The spring member 34 has a mid portion wound in a coil, and both ends formed linearly, and extending outwards. One of the ends thereof is engaged with the engaging protrusion 42 of the cam follower member 32 while the other end thereof is engaged with an engagement receive member 44 formed on the base stand 14. Because the spring member 34 is urged so as to cause the both ends to open outwardly, the one of the ends, engaged with the engaging protrusion 42, acts so as to urge the cam follower member 32 to move downward.

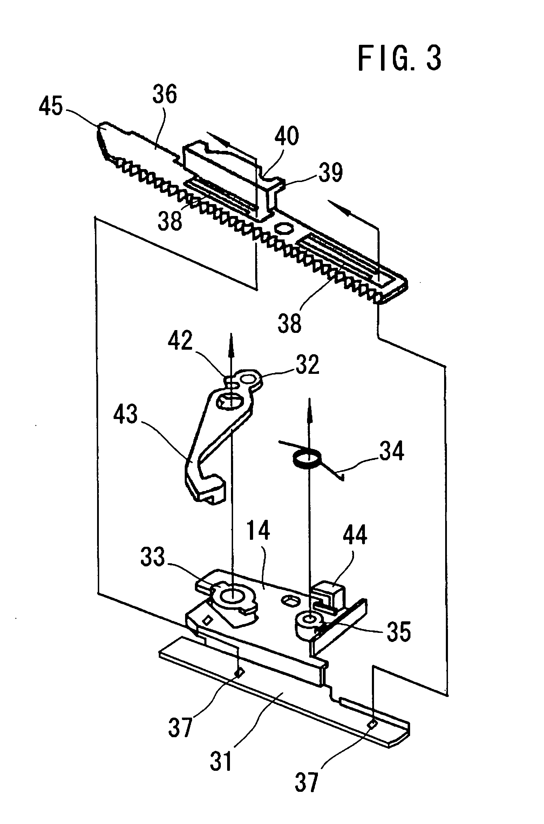

Fig. 3 is an exploded assembly perspective view showing the respective members. The slide face part 31 is molded integrally with the base stand 14, forming a step difference lower by one step than the latter, and the underside of the cam 39 of the shift rack 36 is butted against the step difference. The row of the teeth of the shift rack 36 is set so as to be substantially equivalent in length to the slide grooves 38. With the shift rack 36, on the side thereof, adjacent to a position where the pickup unit 11 stands by at the time for carrying the disc into, or out of the main body frame 1 (refer to a position shown in Fig. 1; on the left-hand side in Fig, 2), there is provided a pushing part 45 having a slope face 46 and a projection part 47 with a tip in a round form, extended along the shift direction of the pickup unit 11.

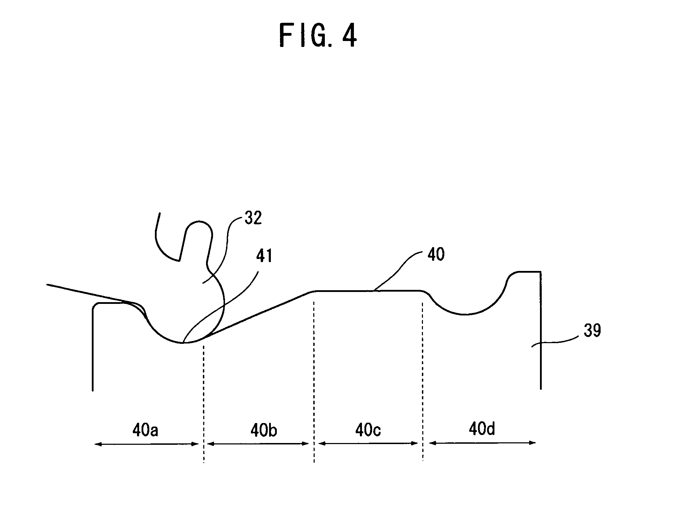

Fig. 4 is an enlarged plan view showing a state where the press-contact face 41 of the cam follower member 32 is pressed into contact with the cam face 40 of the cam 39. The cam face 40 has a left-side curved part 40a, a slope face 40b, a parallel face 40c, and a right-side curved part 40d, formed in that order from the standby position side of the pickup unit 11. When the shift rack 36 is shifted relatively against the slide face part 31, the cam follower member 32 in as pressed into contact state by the urging of spring member 34 is caused to slide along the cam face 40 to thereby fit into the left-side curved part 40a and the right-side curved part 40d. In a state where the cam follower member 32 is fitted in the curved parts, the base stand 14 and the shift rack 36 are in a state where relationship between respective positions thereof is stably held, and the cam follower member 32 will not be disengaged out of its fitted state unless a large drive force acts on the shift rack 36 to thereby forcefully shift the same.

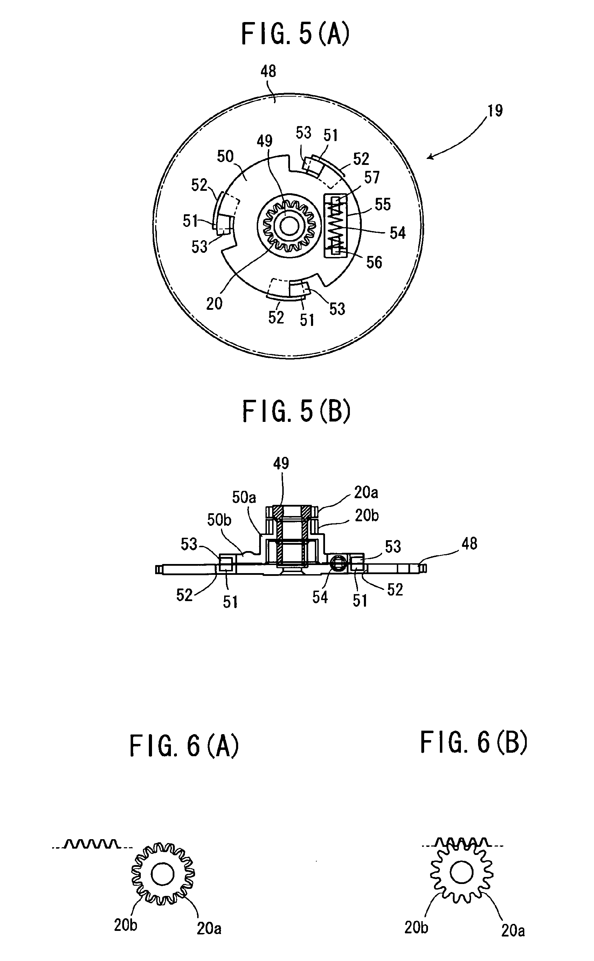

Fig. 5 (A) is an enlarged plan view of the transmission gear 19, and Fig. 5 (B) is an enlarged sectional view of the same. The transmission gear 19 is made up of two-stage gears comprising the double gear 20 coming in mesh with the row of the teeth of the shift rack 36, and a base plate gear 48 larger in diameter, both of which are fitted to a spindle member 49 cylindrical in shape. An upper gear 20a of the double gear 20 is fixed to the upper part of the spindle member 49, and the base plate gear 48 is fixed to the lower part of the spindle member 49. Accordingly, the upper gear 20a and the base plate gear 48 are rotated in unison together with the spindle member 49.

Meanwhile, the spindle member 49 is provided with a support member 50 having a cylindrical part 50a fitted onto the spindle member 49 so as to be able to rotatably reciprocate, and a lower gear 20b of the double gear 20 is fixed to the cylindrical part 50a in such a way as to overlap the upper gear 20a. In Fig. 5 (A), the lower gear 20b is indicated by a thin solid line. With the support member 50, a slide plate part 50b slidable on the upper face of the base plate gear 48 is formed integrally with the cylindrical part 50a. On the periphery of the slide plate part 50b, there are disposed stepped parts 51 formed by cutting out the slide plate part 50b at equal intervals, and the stepped parts 51 are inserted in engagement holes 52 defined in the base plate gear 48, respectively, to be thereby engaged with engagement parts 53 protruded above the engagement holes 52, respectively. Shifting of the stepped parts 51 within the engagement holes 52, respectively, enables the support member 50 to rotatably reciprocate around the spindle member 49.

Further, with the support member 50, there is formed an opening 55 rectangular in shape, for fitting a compression spring 54 therein, and the compression spring 54 is fitted therein by inserting both ends thereof into an attachment protrusion 56 protruding from the support member 50, and an attachment protrusion 57 protruding from the base plate gear 48. Accordingly, the support member 50 is in such a state as urged clockwise by the compression spring 54, so that the stepped parts 51 are in a state as butted against the engagement holes 52, respectively. In this state, as shown in Fig. 6 (A), the teeth of the upper gear 20a and the teeth of the lower gear 20b are set to such a state as slightly mismatched (a thin solid line indicates the lower gear 20b). When the teeth of the shift rack 36 is in mesh with the teeth of the double gear 20, the teeth of the shift rack 36 enter between the teeth of the upper gear 20a and those of the lower gear 20b, however, because the lower gear 20b is urged by the compression spring 54, the teeth of the shift rack 36 is clamped by the teeth of the upper gear 20a and those of the lower gear 20b as shown in Fig. 6 (B), thereby preventing backlash.

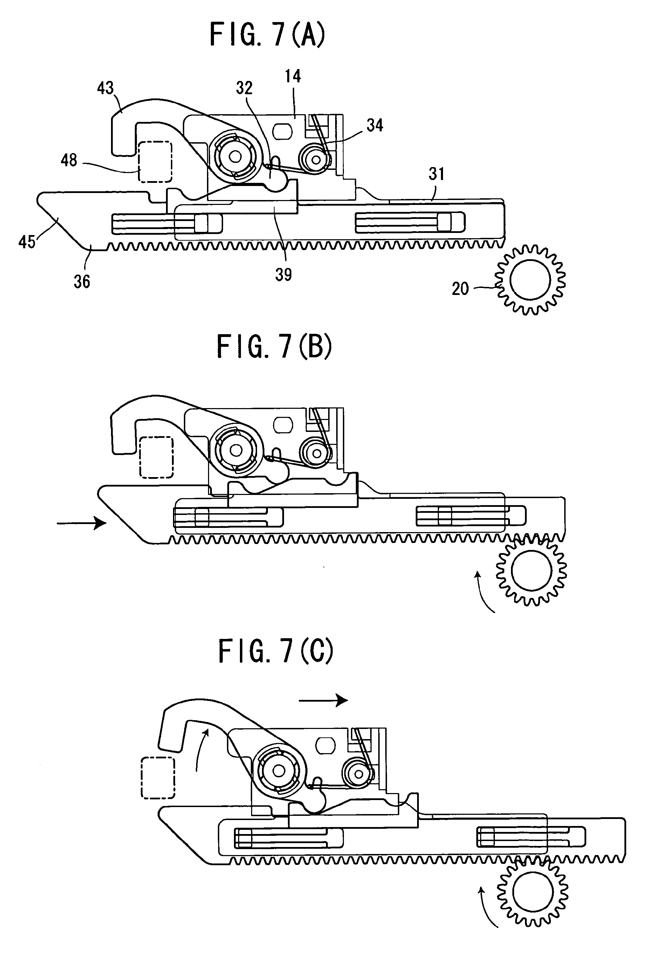

Now, operation according to the present embodiment is described with reference to Figs. 7 (A) to 7 (C). In these figures, in order to provide a clear understanding of the operation with ease, the cam follower member 32, the spring member 34, and the shift rack 36 are drawn by a heavy solid line, respectively, and other members are drawn by thin solid lines. Further, thin solid lines otherwise hidden by those members are also shown.

Fig. 7 (A) shows a state where the pickup unit 11 is at a standby position. In this state, with the shift rack 36 having slid leftward in relation to the slide face part 31, the slide protrusions 37 of the slide face part 31 are positioned at the respective right end parts of the slide grooves 38 of the shift rack 36. Further, with the cam follower member 32 fitted in the right-side curved part 40d of the cam face 40, positioning of the slide face part 31 as well as the shift rack 36 is maintained. Further, with the rock arm 43 retained by a stopper 48 provided on the base plate frame 3, the pickup shift device is prevented from being accidentally operated.

As described hereinbefore, when the disc is set on top of the turntable 9 upon activation of the rocking guide member 25, a pushing protrusion provided on the rocking guide member 25 moves to push the pushing part 45 of the shift rack 36 rightward as shown in Fig. 7 (B). By the agency of such a pushing force, the cam follower member 32 is disengaged from the right-side curved part 40d, whereupon the shift rack 36 starts rightward shift. Then, the cam follower member 32 keeps sliding on the parallel face 40c and the slope face 40b. Following the rightward shift of the shift rack 36, the right end part of the teeth of the shift rack 36 comes to be in mesh with the double gear 20. Since the double gear 20 has already been driven for rotation, the double gear 20 in mesh with the shift rack 36 continues clockwise rotation, thereby causing the shift rack 36 to be shifted further rightward.

As a result of continuation in the rightward shift of the shift rack 36, the slide protrusions 37 of the slide face part 31 arrive at the left end parts of the respective slide groove 38 of the shift rack 36, whereupon the cam follower member 32 comes to be in such a state as fitted in the left-side curved part 40a as shown in Fig. 7 (C), thereby causing the base stand 14 and the shift rack 36 to make rightward shift in unison. Upon the cam follower member 32 fitting into the left-side curved part 40a, the cam follower member 32 is turned clockwise, thereby causing the rock arm 43 to be disengaged from the stopper 48, so that the base stand 14 can make rightward shift without being interfered with. Thus, with the cam follower member 32 in the state as fitted in the left-side curved part 40a, the base stand 14 and the shift rack 36 are kept in a predetermined relationship in position. When the transmission gear 19 is driven for rotation, the base stand 14 and the shift rack 36 are shifted in unison from side to side, thereby controlling positioning such that the pickup unit 11 is at a suitable read-in position.

In the case of returning the pickup unit 11 to the standby position, operation is executed by the same procedure in sequence reverse to the sequence of the operation described in the foregoing. More specifically, in Fig. 7 (C), when the base stand 14 and the shift rack 36 are caused to make further leftward shift in unison by rotating the transmission gear 19 counterclockwise, the base stand 14 stops shifting by virtue of a stopper (not shown), whereupon the pickup unit 11 stops at the standby position. Then, only the shift rack 36 makes leftward shift, and the cam follower member 32 is disengaged from the left-side curved part 40a to thereby slide on the slope face 40b and the parallel face 40c, being turned counterclockwise. Upon continuation in the leftward shift of the shift rack 36, the pushing part 45 pushes the pushing protrusion of the rocking guide member 25 to thereby cause the rocking guide member 25 to operate. Thereafter, the cam follower member 32 is fitted into the right-side curved part 40d, whereupon the rock arm 43 falls in such a state as retained by the stopper 48. When the row of the teeth of the shift rack 36 comes to be out of contact with the teeth of the double gear 20, the shift rack 36 stops shifting. Thus, while returning the pickup unit 11 to the standby position, the shift rack 36 is caused to make further shift, thereby enabling linkup operation with other mechanisms to be executed.

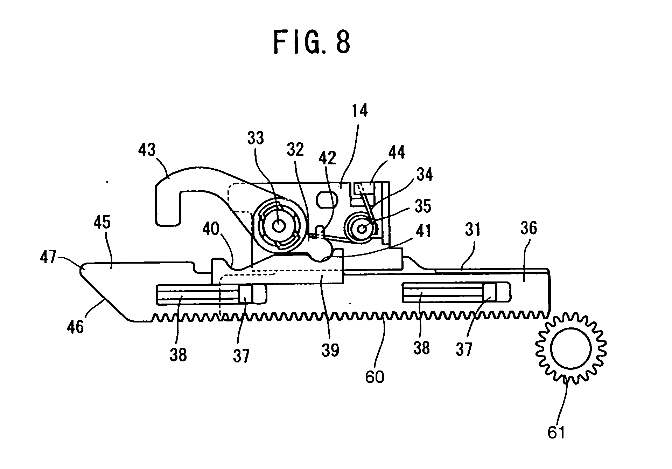

Fig. 8 is a partially enlarged plan view of another embodiment of the invention. In the figure, parts corresponding to those for the embodiment described above are denoted by like reference numerals. On a side of a base stand 14 fixed to a side part of a pickup unit 11, opposite from the pickup unit 11, a slide face part 31 having a base stand rack 60 is extended, and on the upper face of the base stand 14, there are erected side by side a rotating spindle 33 for pivotally supporting a cam follower member 32 so as to be rotatably reciprocating, and an attachment spindle 35 to which a spring member 34 is fitted.

On the upper face of the base stand rack 60, a shift rack 36 is disposed in such a way as to overlap the former, and on respective side faces of the base stand rack 60 and the shift rack 36, there is formed a linear row of teeth along the shift direction of the pickup unit 11, and the linear row of teeth for both the parts are set to run along the same straight line. On the upper face of the slide face part 31, there are erected slide protrusions 37 on the right and left sides, respectively, along the shift direction of the pickup unit 11, with a predetermined spacing interposed therebetween. The shift rack 36 is provided with slide grooves 38 linear in shape, in which the slide protrusions 37 fit, respectively, and which are formed along the shift direction of the pickup unit 11. Accordingly, the shift rack 36 is rendered freely slidable only in the shift direction of the pickup unit 11 by virtue of the slide protrusions 37. On the side of the shift rack 36, opposite from the side face thereof, provided with the linear row of the teeth, there is disposed a cam 39 having a cam face 40 formed in the shape of curvature.

A cam follower member 32 has a press-contact face 41 pressed into contact with the cam face 40, formed in the shape of curvature in such a way as to be seen as a circular arc in a plan view, and an engaging protrusion 42 is protruded on the side of the cam follower member 32, opposite from the press-contact face 41. A rock arm 43 at a position symmetrical with the cam follower member 32 about the rotating spindle 33 is formed integrally with the cam follower member 32, and as the cam follower member 32 is rocked around the rotating spindle 33, so rocked is the rock arm 43 as well in the same direction in sync with the cam follower member 32. A state in which the press-contact face 41 of the cam follower member 32 is pressed into contact with the cam face 40 of the cam 39 is the same as is shown in Fig. 4, therefore omitting description thereof.

A spring member 34 has a mid portion thereof, wound in a coil, and both ends thereof, formed in the shape of a straight line protruding outward, respectively. One of the ends thereof is engaged with the engaging protrusion 42 of the cam follower member 32 while the other end thereof is engaged with an engagement receive member 44 formed on the base stand 14. Because the spring member 34 is urged so as to cause the both ends to open outwardly, the one of the ends, engaged with the engaging protrusion 42, acts so as to urge the cam follower member 32 to move downward.

With the present embodiment, a single gear is used for a gear 61 for drive transmission.

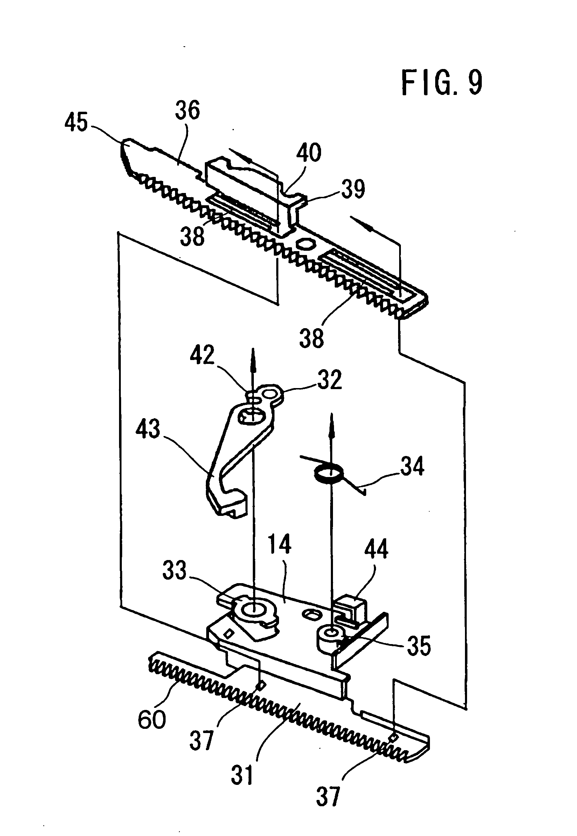

Fig. 9 is an exploded assembly perspective view showing respective constituent members. The slide face part 31 is molded integrally with the base stand 14, forming a step difference lower by one step than the latter, and the underside of the cam 39 of the shift rack 36 is butted against the step difference. The row of the teeth of the shift rack 36 is formed so as to be extended longer than the row of the teeth of the base stand rack 60, and the length of an extended portion of the row of the teeth is set to be substantially the same as the length of the slide groove 38. With the shift rack 36, on the side thereof, adjacent to a position where the pickup unit 11 stands by at the time for carrying the disc into, or out of the main body frame 1 (refer to the position shown in Fig. 1; on the left-hand side in Fig, 2), there is provided a pushing part 45 having a slope face 46 and a projection part 47 with a tip in a round form, extended along the shift direction of the pickup unit 11.

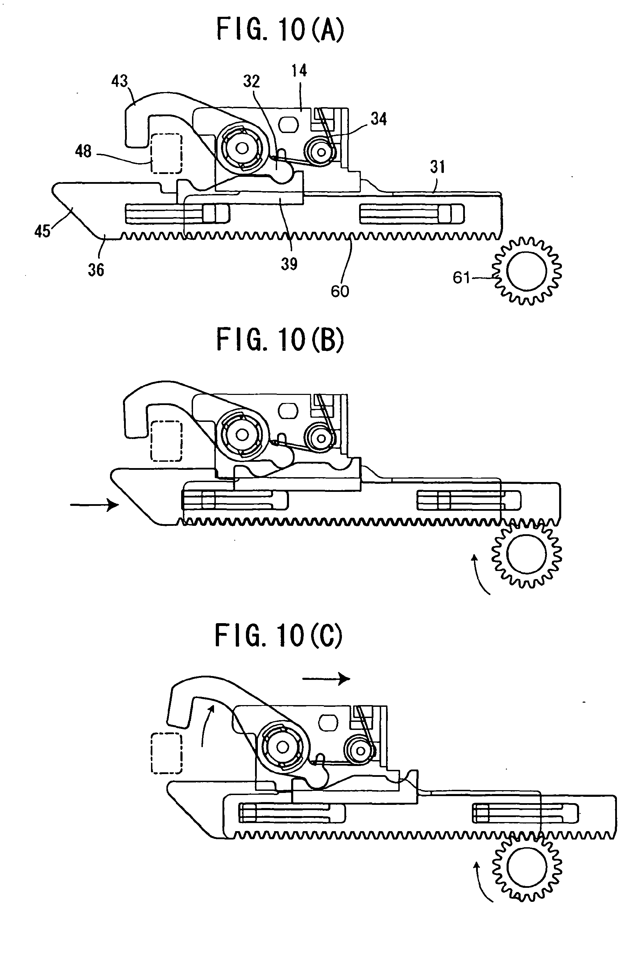

Now, operation according to the present embodiment is described with reference to Figs. 10 (A) to 10 (C). In these figures, in order to provide a clear understanding of the operation with ease, the cam follower member 32, the spring member 34, and the shift rack 36 are drawn by a heavy solid line, respectively, and other members are drawn by thin solid lines. Further, thin solid lines otherwise hidden by those members are also shown.

Fig. 10 (A) shows a state where the pickup unit 11 is at a standby position. In this state, with the shift rack 36 having slid leftward in relation to the base stand rack 60, the slide protrusions 37 of the slide face part 31 are positioned at the respective right end parts of the slide grooves 38 of the shift rack 36. Further, with the cam follower member 32 fitted in the right-side curved part 40d of the cam face 40, positioning of the base stand rack 60 as well as the shift rack 36 is maintained. Further, with the rock arm 43 retained by a stopper 48 provided on a base plate frame 3, the pickup shift device is prevented from being accidentally operated.

As described hereinbefore, when the disc is set on top of the turntable 9 upon activation of a rocking guide member 25, a pushing protrusion provided on the rocking guide member 25 moves to push the pushing part 45 of the shift rack 36 rightward as shown in Fig. 10 (B). By the agency of such pushing force, the cam follower member 32 is disengaged from the right-side curved part 40d, whereupon the shift rack 36 starts rightward shift. Then, the cam follower member 32 keeps sliding on the parallel face 40c and the slope face 40b. Following the rightward shift of the shift rack 36, the right end part of the row of the teeth of the shift rack 36 comes to be in mesh with the gear 61. Since the gear 61 has already been driven for rotation, the gear 61 in mesh with the shift rack 36 continues clockwise rotation, thereby causing the shift rack 36 to be shifted further rightward.

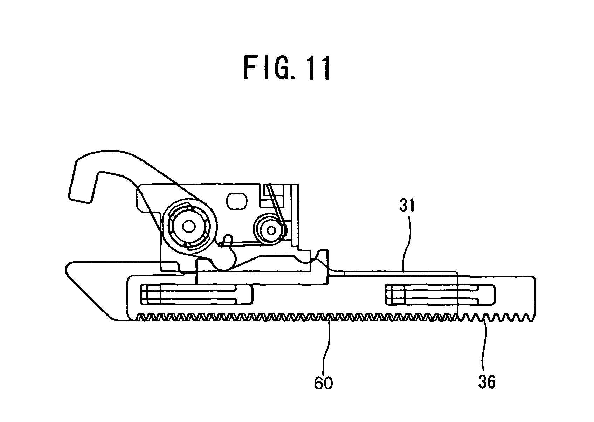

As a result of continuation in the rightward shift of the shift rack 36, the slide protrusions 37 of the slide face part 31 arrive at the left end parts of the respective slide groove 38 of the shift rack 36, whereupon the cam follower member 32 comes to be in such a state as fitted in the left-side curved part 40a as shown in Fig. 10 (C), thereby causing the base stand 50 and the shift rack 36 to make rightward shift in unison so that the row of the teeth of the gear 61 is in mesh with the base stand 50. Upon the cam follower member 32 fitting into the left-side curved part 40a, the cam follower member 32 is turned clockwise, thereby causing the rock arm 43 to be disengaged from the stopper 48, so that the base stand 14 can make rightward shift without being interfered with. Thus, with the cam follower member 32 in the state as fitted in the left-side curved part 40a, the base stand rack 60 and the shift rack 36 are kept in a predetermined positional relationship. Such a positional relationship is shown in Fig. 11. Fig. 11 shows the base stand rack 60 and the shift rack 36, in a state where both members are not in mesh with the gear 61, indicating that the positional relationship between both the members is kept with the row of the teeth of the base stand rack 60 slightly misaligned from that of the shift rack 36. That is, it is the positional relationship between the base stand rack 60 and the shift rack 36 when the cam follower member 32 is fitted in the left-side curved part 40a, and is in a stable state. With the rows of the teeth slightly misaligned from each other, the teeth of the gear 61 come to mesh with the teeth of both the base stand rack 60 and the shift rack 36, whereupon the teeth of the gear 61 comes to wedge in between the teeth of both the members, thereby pushing the shift rack 36 slightly rightward. Accordingly, the left-side curved part 40a slips out of place slightly rightward, causing the cam follower member 32 to fall in a position out of the stable state, however, the urging force of spring member 34 then comes to act on the cam follower member 32 so as to cause it to return to the stable state, thereby causing the shift rack 36 to move back leftward. Thus, in a state where the teeth of the gear 61 are in mesh with the row of the teeth of both the members, overlapping each other, the teeth of the gear 61 are clamped between the teeth of the base stand rack 60 and the teeth of the shift rack 36, thereby preventing backlash. When the gear 61 is driven for rotation, the base stand rack 60 and the shift rack 36 are shifted in unison from side to side, thereby controlling positioning such that the pickup unit 11 is at a suitable read-in position.

In the case of returning the pickup unit 11 to the standby position, operation is executed by the same procedure in sequence reverse to the sequence of the operation described in the foregoing. More specifically, in Fig. 10 (C), when the base stand rack 60 and the shift rack 36 are caused to make further leftward shift by rotating the gear 61 counterclockwise, the row of the teeth of the base stand rack 60 disappear, and, as shown in Fig. 10 (B), the extended portion of the row of the teeth of the shift rack 36 comes to mesh with the gear 61. At this point in time, the base stand rack 60 stops shifting, whereupon the pickup unit 11 stops at the standby position. Then, only the shift rack 36 starts leftward shift, and the cam follower member 32 is disengaged from the left-side curved part 40a to thereby slide on the slope face 40b and the parallel face 40c, being turned counterclockwise. Upon continuation in the leftward shift of the shift rack 36, the pushing part 45 pushes the pushing protrusion of the rocking guide member 25 to thereby cause the rocking guide member 25 to operate. Thereafter, the cam follower member 32 is fitted into the right-side curved part 40d, whereupon the rock arm 43 falls in such a state as retained by the stopper 48. When the cam follower member 32 comes to fit into the right-side curved part 40d, a force causing the cam follower member 32 to enter the right-side curved part 40d by the urging of the spring member 34 comes into play, thereby forcing the shift rack 36 to make leftward shift. As a result, the row of the teeth of the shift rack 36 comes to be out of contact with the teeth of the gear 61, whereupon the shift rack 36 stops shifting. Thus, while returning the pickup unit 11 to the standby position, the shift rack 36 is caused to make further shift, thereby enabling linkup operation with other mechanisms to be executed.

The features disclosed in the foregoing description, in the claims and/or in the accompanying drawings may, both separately and in any combination thereof, be material for realising the invention in diverse forms thereof.

## Claims

1. A pickup shift device comprises:
a shift rack (36) slidable along the shift direction of a pickup unit (11), provided on a slide face part (31) disposed in a base stand (14) fixed to a side part of the pickup unit (11):
a cam follower member (32) attached to the base stand (14) so as to be rotatably reciprocating;
a cam face (40) provided in the shift rack (36);
an urging member (34) provided in the base stand (14), urging the cam follower member (32) to be always pressed into contact with the cam face (40);
a gear member (61) to be meshed with teeth formed in the shift rack (36); and
a drive means (15) for driving the gear member (61) for rotation;
wherein fitting of the cam follower member (32) in a curvature of the cam face (40) causes the base stand (14) and the shift rack (36) to shift in unison.

2. A pickup shift device according to Claim 1, wherein a rock arm (43) is formed integrally with the cam follower member (32), and the cam face (40) is formed in a curve such that sliding of only the shift rack (36), on the slide face part (31), causes the cam follower member (32) to be disengaged from the curvature, and subsequently, the rock arm (43) makes rocking motion against the urging of the urging member (34).

3. A pickup shift device according to Claim 1, wherein the gear member (61) comprises a double gear (20) in mesh with the teeth formed in the shift rack (36), and an urging member (34) with teeth, for urging respective gears of the double gear (20), in directions opposite to each other, such that the teeth of the shift rack (36) is clamped by the teeth of the respective gears of the double gear (20), meshed with the shift rack (36).

4. A pickup shift device according to Claim 1, wherein the slide face part (31) has a base stand rack (50) with a row of teeth formed along the shift direction of the pickup unit (11), and the shift rack (36) has a row of teeth formed in such a way as to overlap the row of the teeth of the base stand rack (50), and fitting of the cam follower member (32) in the curvature of the cam face (40) causes teeth of the gear member (61) to be clamped by teeth of the base stand rack (50) and teeth of the shift rack (36), meshed with the gear member (61).

5. A pickup shift device according to Claim 4, wherein in the case of shifting the pickup unit (11) toward the standby position of the pickup unit (11) by rotation of the gear member (61), the row of the teeth of the shift rack (36) is preferably formed so as to be extended beyond the end of the row of the teeth of the base stand rack (50), so that meshing of the gear member (61) with an extended portion of the row of the teeth of the shift rack (36) causes the shift rack (36) only to make further shift.
